# EUROPÄISCHE PATENTANMELDUNG

(11) **EP 4 481 348 A1**
(43) Veröffentlichungstag der Anmeldung: **25.12.2024**
(21) Anmeldenummer: 24174857.3
(22) Anmeldetag: 08.05.2024
(51) Int. Cl.: G01L 3/10

(54) **VORRICHTUNG UND VERFAHREN ZUR MESSUNG DES DREHMOMENTS EINER ROTIERENDEN WELLE**

(30) Priorität: 23.06.2023 EP 23181140
(71) Anmelder: Kistler Holding AG, 8408 Winterthur (CH)
(72) Erfinder: Regitz, Simon, 75223 Niefern-Öschelbronn (DE); Rilling, Benjamin, 71229 Leonberg (DE)

(57) **Zusammenfassung**

Die Erfindung betrifft eine Vorrichtung (V) zur Messung des Drehmoments (M) einer rotierenden Welle (W, W'); welche Vorrichtung (V) einen Messkörper (1, 1') und eine Auswerteeinheit (2) aufweist; welcher Messkörper (1, 1') an der Welle (W, W') befestigbar ist und im befestigten Zustand mit der Welle (W, W') um eine Längsachse (A) der Welle (W, W') rotiert; welcher Messkörper (1, 1') eine Messeinheit (12), eine Messverstärkereinheit (13) und eine Telemetrieeinheit (14) aufweist; welche Messeinheit (12) im befestigten Zustand unter der Wirkung des Drehmoments (M) ein Messsignal (MS) erzeugt; welche Messverstärkereinheit (13) das Messsignal (MS) verstärkt; welche Telemetrieeinheit (14) das verstärkte Messsignal (MS) digitalisiert und drahtlos an die Auswerteeinheit (2) überträgt; wobei der Messkörper (1, 1') eine Hauptträgheitsachse (X) aufweist, welche Hauptträgheitsachse (X) im befestigten Zustand auf der Längsachse (A) liegt.

## Beschreibung

### Technisches Gebiet

Die Erfindung betrifft eine Vorrichtung und ein Verfahren zur Messung des Drehmoments einer rotierenden Welle nach den Oberbegriffen der unabhängigen Ansprüche.

### Stand der Technik

Eine Welle ist ein Maschinenelement, welches um eine Achse rotiert und die Funktion hat, bei der Rotation eine Drehbewegung und ein Drehmoment zu übertragen. Solch eine Welle hat vielfältige Anwendungen in Maschinen, beispielsweise in der Kraftfahrzeugtechnik als Antriebswelle, in der Energietechnik als Turbinenwelle, usw.

Mit dem von der Welle übertragenen Drehmoment lassen sich wichtige Kenngrössen der Maschinen wie Leistung, Wirkungsgrad, Reibwerte, usw. bestimmen. Aus diesem Grund wird das Drehmoment sowohl bei der Entwicklung von Maschinen als auch beim industriellen Einsatz der Maschinen gemessen.

Zur Messung des Drehmoments einer rotierenden Welle ist aus der Schrift DE19719921A1 eine Vorrichtung bekannt, welche einen mit der Welle rotierenden Messkörper in Form eines Messflansches und eine Auswerteeinheit umfasst. Die Auswerteeinheit weist eine Statorantenne auf. Die Auswerteeinheit ist räumlich von der Welle und dem Messkörper beabstandet. Der Messkörper wiederum weist einen Dehnungsmessstreifen, einen Messverstärker und eine Telemetrieeinrichtung mit Rotorantenne auf. Unter der Wirkung des zu messenden Drehmoments erzeugt der Dehnungsmessstreifen ein Messsignal, der Messverstärker verstärkt das Messsignal, und die Telemetrieeinrichtung digitalisiert das verstärkte Messsignal in Messdaten und sendet die Messdaten über die Rotorantenne an die Statorantenne, von wo die Messdaten zur Auswerteeinheit gelangen. Parameter des Messverstärkers wie der Nullpunkt oder der Verstärkungsfaktor lassen sich über von der Statorantenne an die Rotorantenne gesendete Signale einstellen.

Nun ist es ein Wunsch der Anwender, die Vorrichtung für Wellen mit unterschiedlich grossen Durchmessern einzusetzen. Deshalb werden mehrere Messkörpern bereitgestellt, welche in ihren Dimensionen an die jeweiligen Wellendurchmesser angepasst sind, während die Auswerteeinheit die gleiche bleibt. Die verschieden dimensionierten Messkörper beeinflussen gerade bei schnell rotierenden Wellen mit deutlich über 1000min⁻¹ die Messgenauigkeit, weshalb die für unterschiedlich grosse Wellendurchmesser erzeugten Messsignale nur bedingt vergleichbar sind.

Eine erste Aufgabe der vorliegenden Erfindung ist es, die aus der DE19719921A1 bekannte Vorrichtung zur Messung des Drehmoments einer rotierenden Welle zu verbessern. So soll die Messgenauigkeit erhöht werden. Und dann stellt sich die Erfindung die weitere Aufgabe, ein Verfahren anzugeben, welches eine einfache, rasche und kostengünstige Messung des Drehmoments einer rotierenden Welle ermöglicht.

### Darstellung der Erfindung

Diese Aufgaben werden durch die Merkmale der unabhängigen Ansprüche gelöst.

Die Erfindung betrifft eine Vorrichtung zur Messung des Drehmoments einer rotierenden Welle; welche Vorrichtung einen Messkörper und eine Auswerteeinheit aufweist; welcher Messkörper an der Welle befestigbar ist und im befestigten Zustand mit der Welle um eine Längsachse der Welle rotiert; welcher Messkörper eine Messeinheit, eine Messverstärkereinheit und eine Telemetrieeinheit aufweist; welche Messeinheit im befestigten Zustand unter der Wirkung des Drehmoments ein Messsignal erzeugt; welche Messverstärkereinheit das Messsignal verstärkt; welche Telemetrieeinheit das verstärkte Messsignal digitalisiert und drahtlos an die Auswerteeinheit überträgt; wobei der Messkörper eine Hauptträgheitsachse aufweist, welche Hauptträgheitsachse im befestigten Zustand auf der Längsachse liegt.

Die Erfindung betrifft auch ein Verfahren zur Messung des Drehmoments einer rotierenden Welle; unter Verwendung einer Vorrichtung mit einem Messkörper und einer Auswerteeinheit; welcher Messkörper eine Messeinheit, eine Messverstärkereinheit und eine Telemetrieeinheit aufweist; wobei der Messkörper an der Welle befestigt wird; wobei die Welle in Rotation um eine Längsachse der Welle gesetzt wird und das Drehmoment überträgt; wobei die Messeinheit unter der Wirkung des Drehmoments ein Messsignal erzeugt; wobei die Messverstärkereinheit das Messsignal verstärkt; wobei die Telemetrieeinheit das verstärkte Messsignal digitalisiert und drahtlos an die Auswerteeinheit überträgt; und wobei ein Messkörper bereitgestellt wird, welcher Messkörper eine Hauptträgheitsachse aufweist, welche Hauptträgheitsachse im befestigten Zustand auf der Längsachse liegt.

Die Erfindung beruht auf der Erkenntnis, dass der Messkörper der aus der DE19719921A1 bekannten Vorrichtung zur Messung des Drehmoments einer rotierenden Welle eine heterogene Zusammensetzung aufweist, denn er besteht aus einem Messflansch, einem Dehnungsmessstreifen, einem Messverstärker und einer Telemetrieeinrichtung mit Rotorantenne. Aufgrund der heterogenen Zusammensetzung ist auch seine Massenverteilung bezüglich der Längsachse der rotierenden Welle unsymmetrisch, mit dem Ergebnis, dass der Schwerpunkt des Messkörpers nicht auf der Längsachse liegt, was zu einer statischen Unwucht führt, bzw. dass die Hauptträgheitsachse des Messkörpers in einem Winkel ≠0° zur Längsachse gekippt ist, was zu einer dynamischen Unwucht führt. Die aus der statischen Unwucht und der dynamischen Unwucht resultierende Unwucht bewirkt ein Stördrehmoment, welches mit dem zu messenden Drehmoment überlagert ist und die Messung des Drehmoments verfälscht. Der Messkörper der erfindungsgemässen Vorrichtung ist statisch und dynamisch ausgewuchtet und das Stördrehmoment ist minimiert, was die Messgenauigkeit der Vorrichtung erhöht.

Vorteilhafte Weiterbildungen der Erfindung sind in den abhängigen Ansprüchen aufgeführt.

### Kurze Beschreibung der Zeichnungen

Im Folgenden wird die Erfindung beispielhaft unter Beizug der Figuren näher erklärt. Es zeigen
- Fig. 1: eine schematische Darstellung der Vorrichtung V zur Messung des Drehmoments M einer Welle W, W' mit einem Messkörper 1, 1' und einer Auswerteeinheit 2;
- Fig. 2: eine Ansicht eines Teils einer ersten Ausführungsform des Messkörpers 1 und der Welle W gemäss Fig. 1;
- Fig. 3: eine Ansicht eines Teils einer zweiten Ausführungsform des Messkörpers 1' und der Welle W' gemäss Fig. 1;
- Fig. 4: eine Ansicht eines Teils des Messkörpers 1, 1' gemäss Fig. 1 mit einer Messeinheit 12 zwischen einem ersten Messkörperteilgehäuse 11a und einem zweiten Messkörperteilgehäuse 11b;
- Fig. 5: eine Explosionsdarstellung des Messkörpers 1, 1' gemäss Fig. 1 mit einer Messverstärkereinheit 13 und einer Telemetrieeinheit 14 im ersten Messkörperteilgehäuse 11a und mit einer Energiespeichereinheit 15 im zweiten Messkörperteilgehäuse 11b;
- Fig. 6: eine Ansicht in einem ersten Querschnitt B-B entlang einer ersten Schnittachse B durch das erste Messkörperteilgehäuse 11a gemäss Fig. 5; und
- Fig. 7.: eine Ansicht in einem zweiten Querschnitt C-C entlang einer zweiten Schnittachse C durch das zweite Messkörperteilgehäuse 11b gemäss Fig. 5.

Gleiche Bezugszeichen bezeichnen in den Figuren gleiche Gegenstände.

### Wege zur Ausführung der Erfindung

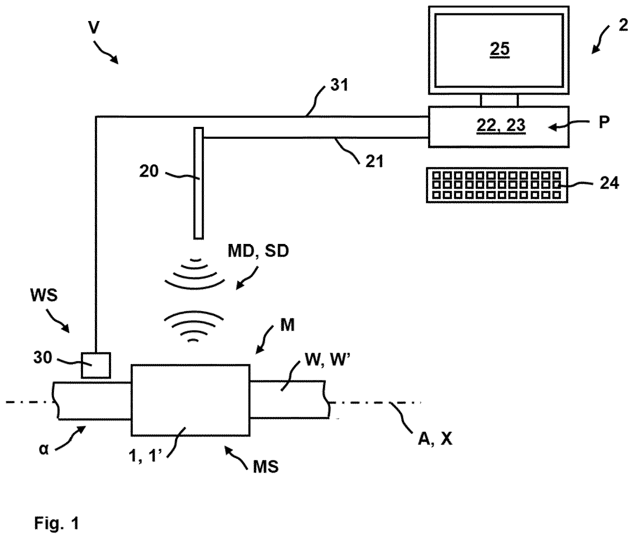

Fig. 1 zeigt eine Welle W, W', welche um eine Längsachse A der Welle W, W' rotieren kann und bei der Rotation ein Drehmoment M überträgt. Die Welle W, W' ist bezüglich der Längsachse A ein rotationssymmetrischer Körper und aus einem mechanisch beständigem Material wie Metall, Kunststoff, usw.

Weiter zeigt Fig. 1 eine Vorrichtung V zur Messung des Drehmoments M der Welle W, W'. Die Vorrichtung V setzt sich aus einem Messkörper 1, 1' und einer Auswerteeinheit 2 zusammen. Der Messkörper 1, 1' ist an der Welle W, W' befestigt und rotiert mit der Welle W, W' um die Längsachse A. Die Auswerteeinheit 2 ist räumlich von der Welle W, W' und vom Messkörper 1, 1' beabstandet.

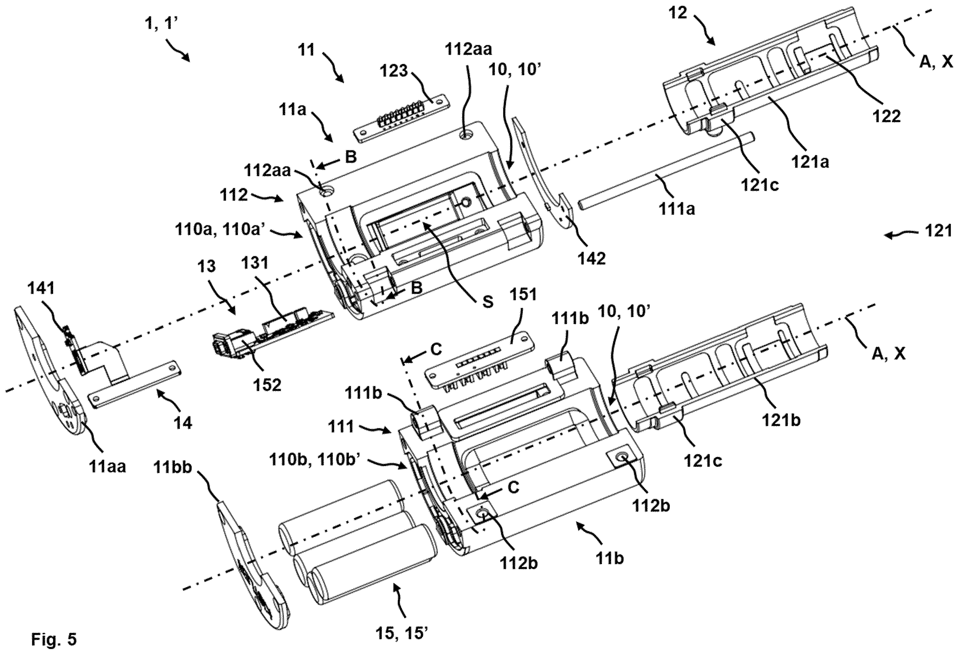

In den Ansichten gemäss Fig. 1 bis 4 und der Explosionsdarstellung gemäss Fig. 5 ist der Messkörper 1, 1' hohlzylinderförmig. Im Bereich der Längsachse A weist der Messkörper 1, 1' einen axialen Hohlraum 10, 10' auf. Der axiale Hohlraum 10, 10' weist einen Hohlraumdurchmesser D10, D10' auf. Der Hohlraumdurchmesser D10, D10' ist so bemessen, dass er in radialer Richtung senkrecht zur Längsachse A gleich dem Wellendurchmesser DW, DW' ist. Bezüglich der Längsachse A ist der Messkörper 1, 1' radial aussenseitig an der Welle W, W' befestigt. Vorzugsweise erfolgt die Befestigung per Formschluss und Kraftschluss durch Klemmung. Die Befestigung ist reversibel lösbar.

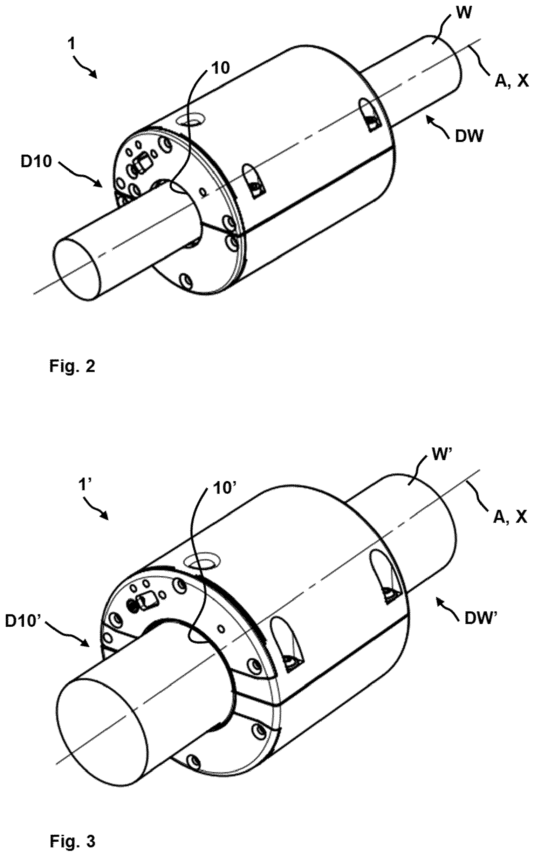

Nun können die Welle W, W' unterschiedliche Wellendurchmesser WD, WD' haben. Dementsprechend weist die Vorrichtung mehrere Messkörper 1, 1' auf, deren Hohlraumdurchmesser D1, D1' gleich den unterschiedlichen Wellendurchmessern DW, DW' ist. Dazu zeigen die Fig. 2 und 3 zwei Ausführungsformen der Welle W, W' und des axialen Hohlraums 10, 10' des Messkörpers 1, 1'. In der ersten Ausführungsform gemäss Fig. 2 hat die Welle W einen Wellendurchmesser DW von 25mm, während die Welle W' in der zweiten Ausführungsform gemäss Fig. 3 einen Wellendurchmesser DW' von 45mm hat. In einer ersten Ausführungsform gemäss Fig. 2 hat der Messkörper 1 einen Hohlraumdurchmesser D10 von 25mm, während der Messkörper 1' der zweiten Ausführungsform gemäss Fig. 3 einen Hohlraumdurchmesser D10' von 45mm hat. Natürlich steht es dem Fachmann frei, die Erfindung mit Wellen und axialen Hohlräumen mit kleineren Durchmessern als 25mm und Wellen und axiale Hohlräume mit grösseren Durchmessern als 45mm zu realisieren.

Der Messkörper 1, 1' weist ein Messkörpergehäuse 11, eine Messeinheit 12, eine Messverstärkereinheit 13, eine Telemetrieeinheit 14 und eine Energiespeichereinheit 15 auf.

Das Messkörpergehäuse 11 ist dazu ausgebildet, die Messeinheit 12, die Messverstärkereinheit 13, die Telemetrieeinheit 14 und die Energiespeichereinheit 15 vor schädlichen Umwelteinflüssen wie Staub, Feuchtigkeit, usw. zu schützen.

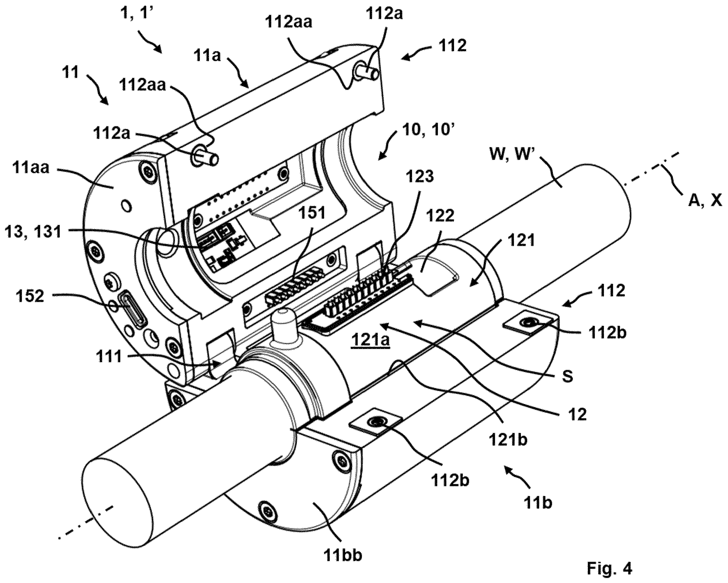

In der Ansicht gemäss Fig. 4 und der Explosionsdarstellung gemäss Fig. 5 ist das Messkörpergehäuse 11 mehrteilig und weist ein erstes Messkörperteilgehäuse 11a und ein zweites Messkörperteilgehäuse 11b auf es weist einen ersten Messkörperteilverschluss 11aa und einen zweiten Messkörperteilverschluss 11bb auf.

Vorzugsweise ist das Messkörpergehäuse 11 in einer in der Längsachse A liegenden Ebene halbiert und die beiden Messkörperteilgehäuse 11a, 11b haben die Form von kongruenten Hälften von Hohlzylindern und die beiden Messkörperteilverschlüsse 11aa, 11bb haben die Form von Hälften von Stirnflächen von Hohlzylindern. Im Bereich der Längsachse A ist jedes der beiden Messkörperteilgehäuse 11a, 11b durch den axialen Hohlraum 10, 10' begrenzt. Die beiden Messkörperteilgehäuse 11a, 11b und die beiden Messkörperteilverschlüsse 11aa, 11bb sind aus einem mechanisch beständigem Material wie Metall, Kunststoff, usw.

Das erste Messkörperteilgehäuse 11a weist mindestens einen ersten Gehäusehohlraum 110a, 110a' auf. Der erste Messkörperteilverschluss 11aa ist dazu ausgebildet, den ersten Gehäusehohlraum 110a, 110a' gegenüber Staub und Feuchtigkeit dicht zu verschliessen. Das zweite Messkörperteilgehäuse 11b weist mindestens einen zweiten Gehäusehohlraum 110b, 110b' auf. Der zweite Messkörperteilverschluss 11bb ist dazu ausgebildet, den zweiten Gehäusehohlraum 110b, 110b' gegenüber Staub und Feuchtigkeit zu verschliessen. Vorzugsweise ist der Verschluss der ersten und zweiten Gehäusehohlräume 110a, 110a', 110b, 110b' eine Kombination aus einem Formschluss und einem Kraftschluss wie eine Schraubverbindung.

In der Explosionsdarstellung gemäss Fig. 5 nimmt der erste Gehäusehohlraum 110a, 110a' die Messverstärkereinheit 13 und die Telemetrieeinheit 14 auf und der zweite Gehäusehohlraum 110b, 110b' nimmt die Energiespeichereinheit 15 auf.

Das mit der Messverstärkereinheit 13 und der Telemetrieeinheit 14 im ersten Gehäusehohlraum 110a, 110a' bestückte und mit dem ersten Messkörperteilverschluss 11a verschlossene erste Messkörperteilgehäuse 11a wird nachfolgend auch erster Messkörperteil 1a genannt. Dementsprechend wird das mit der Energiespeichereinheit 15 im zweiten Gehäusehohlraum 110b, 110b' bestückte und mit dem zweiten Messkörperteilverschluss 11b verschlossene zweite Messkörperteilgehäuse 11b nachfolgend auch zweiter Messkörperteil 1b genannt.

Vorzugsweise weisen die beiden Messkörperteilgehäuse 11a, 11b eine Gelenkeinheit 111 und eine Verbindungseinheit 112 auf.

Die Gelenkeinheit 111 ist dazu ausgebildet, die beiden Messkörperteilgehäuse 11a, 11b um die Längsachse A schwenkbar zusammenzuhalten. In der Explosionsdarstellung gemäss Fig. 5 ist die Gelenkeinheit 111 ein Scharnier mit mindestens einem Stift 111a und mehreren Buchsen 111b. Die Gelenkeinheit 111 hält die beiden Messkörperteilgehäuse 11a, 11b einseitig zusammen. Durch Verschwenkung um die Längsachse A lassen sich die beiden Messkörperteilgehäuse 11a, 11b reversibel von einem aufgeklappten Zustand in einen zugeklappten Zustand bringen und werden dabei von der Gelenkeinheit 111 zusammengehalten.

Die Verbindungseinheit 112 ist dazu ausgebildet, die beiden Messkörperteilgehäuse 11a, 11b lösbar miteinander zu verbinden. Vorzugsweise ist die Verbindungseinheit 112 eine Kombination aus einem Formschluss und einem Kraftschluss wie eine Schraubverbindung, eine Steckverbindung usw. In der Ansicht gemäss Fig. 4 und der Explosionsdarstellung gemäss Fig. 5 besteht die Verbindungseinheit 112 aus mindestens einer Schraube 112a und mindestens einem Durchgangsloch 112aa im ersten Messkörperteilgehäuse 11a und mindestens eine Gewindebohrung 112b im zweiten Messkörperteilgehäuse 11b. Ein Kopf der Schraube 112a wird im Durchgangsloch 112aa gehalten und ein Gewinde der Schraube 112a ragt durch das Durchgangsloch 112aa und ist mit der Gewindebohrung 112b verbindbar. Erst nach dem Lösen der Verbindungseinheit 112 lassen sich die beiden Messkörperteilgehäuse 11a, 11b um die Längsachse A verschwenken. Auch das Lösen der Verbindungseinheit 112 ist reversibel.

In den Ansichten gemäss Fig. 2 und 3 sind die beiden Messkörperteilgehäuse 11a, 11b im zugeklappten Zustand und werden auf einer Seite von der Gelenkeinheit 111 zusammengehalten und sind auf einer anderen Seite über die Verbindungseinheit 112 miteinander verbunden. In der Ansicht gemäss Fig. 4 ist die Verbindungseinheit 112 gelöst und die beiden Messkörperteilgehäuse 11a, 11b sind durch Verschwenkung um die Längsachse A im aufgeklappten Zustand und werden auf der einen Seite nur von der Gelenkeinheit 111 zusammengehalten.

Im zugeklappten Zustand sind die beiden Messkörperteile 1a, 1b ausgewuchtet, d.h. ein Schwerpunkt S des Messkörpers 1, 1' liegt auf der Längsachse A und auch eine Hauptträgheitsachse X des Messkörpers 1, 1' liegt auf der Längsachse A und verläuft in einem Winkel von 0° ungekippt zur Längsachse A.

Für die Auswuchtung gibt es wenig Freiheitsgrade, denn die äusseren Abmessungen und das Gewicht der Messverstärkereinheit 13 und der Telemetrieeinheit 14 im ersten Messkörperteilgehäuse 11a sind vorgegeben, genauso wie die äusseren Abmessungen und das Gewicht der Energiespeichereinheit 15 im zweiten Messkörperteilgehäuse 11b. Und auch der Wellendurchmesser DW, DW' ist vorgegeben, und somit auch der Hohlraumdurchmesser D10, D10' des axialen Hohlraums 10, 10'.

Somit verbleiben als Freiheitsgrade für die Auswuchtung das Gewicht und die Gewichtsverteilung von jedem der beiden Messkörperteilgehäuse 11a, 11b. Das Gewicht und die Gewichtsverteilung des ersten Messkörperteilgehäuses 11a und des zweiten Messkörperteilgehäuses 11b sind auswuchtungsgemäss so eingestellt, dass die beiden Messkörperteile 1a, 1b im zugeklappten Zustand ausgewuchtet sind.

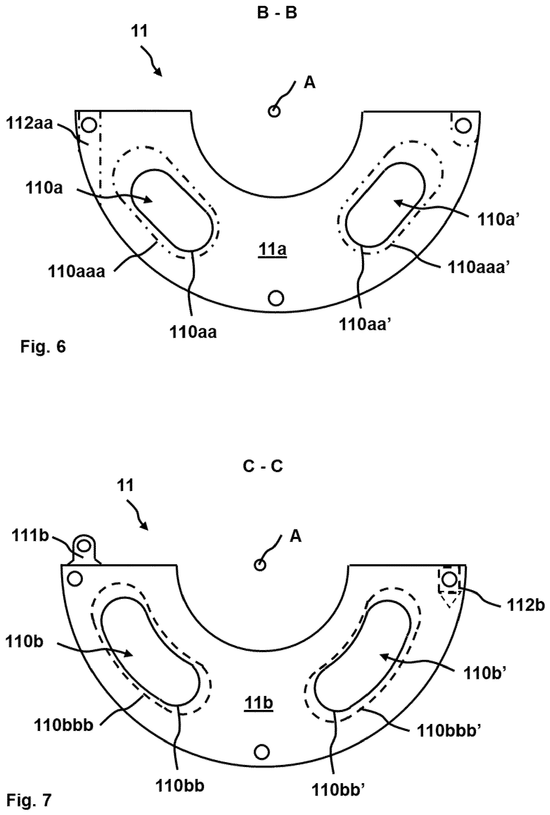

Um dies zu illustrieren zeigt Fig. 6 eine Ansicht in einem ersten Querschnitt B-B entlang einer ersten Schnittachse B durch das erste Messkörperteilgehäuse 11a gemäss Fig. 5 und Fig. 7 zeigt eine Ansicht in einem zweiten Querschnitt C-C entlang einer zweiten Schnittachse C durch das zweite Messkörperteilgehäuse 11b gemäss Fig. 5.

In der Ansicht gemäss Fig. 6 besteht der erste Gehäusehohlraum 110a, 110a' aus einem ersten langlochförmigen Hohlraum 110a zur Aufnahme der Messverstärkereinheit 13 und aus einem weiteren ersten langlochförmigen Hohlraum 110a' zur Aufnahme der Telemetrieeinheit 14. Der erste langlochförmige Gehäusehohlraum 110a ist nach ausserhalb des ersten Messkörperteilgehäuses 11a durch eine erste Kante 110aa begrenzt. Im Inneren weist der erste langlochförmige Gehäusehohlraum 110a mindestens einen punktliniert dargestellten ersten Hinterschnitt 110aaa auf. Der weitere erste langlochförmige Gehäusehohlraum 110a' ist nach ausserhalb des ersten Messkörperteilgehäuses 11a durch eine weitere erste Kante 110aa' begrenzt. Im Inneren weist der weitere erste langlochförmige Gehäusehohlraum 110a' mindestens einen punktliniert dargestellten weiteren ersten Hinterschnitt 110aaa' auf. Der erste Hinterschnitt 110aaa und der weitere erste Hinterschnitt 110aaa' werden nachfolgend auch als erster Hinterschnitt 110aaa, 110aaa' bezeichnet. Über die Grösse und die Form des ersten Hinterschnitts 110aaa, 110aaa' werden das Gewicht und die Gewichtsverteilung des ersten Messkörperteilgehäuses 11a so eingestellt, dass die Hauptträgheitsachse X des Messkörpers 1, 1' im befestigten Zustand auf der Längsachse A liegt.

In der Ansicht gemäss Fig. 7 besteht der zweite Gehäusehohlraum 110b, 110b' aus einem ersten nierenförmigen Hohlraum 110b zur Aufnahme von zwei ersten Lithium-Ionen Ackumulatoren der Energiespeichereinheit 15 und aus einem weiteren ersten nierenförmigen Hohlraum 110b' zur Aufnahme von zwei weiteren Lithium-Ionen Akkumulatoren der Energiespeichereinheit 15. Der zweite nierenförmige Gehäusehohlraum 110b ist nach ausserhalb des zweiten Messkörpergehäuses 11b durch eine zweite Kante 110bb begrenzt. Im Inneren weist der zweite nierenförmige Gehäusehohlraum 110b mindestens einen punktliniert dargestellten zweiten Hinterschnitt 110bbb auf. Der weitere zweite nierenförmige Gehäusehohlraum 110b' ist nach ausserhalb des zweiten Messkörpergehäuses 11b durch eine weitere zweite Kante 110bb' begrenzt. Im Inneren weist der weitere zweite nierenförmige Gehäusehohlraum 110b' mindestens einen punktliniert dargestellten weiteren zweiten Hinterschnitt 110bbb' auf. Der zweite Hinterschnitt 110bbb und der weitere zweite Hinterschnitt 110bbb' werden nachfolgend auch als zweiter Hinterschnitt 110bbb, 110bbb' bezeichnet. Über die Grösse und die Form des zweiten Hinterschnitts 110bbb, 110bbb' werden das Gewicht und die Gewichtsverteilung des zweiten Messkörperteilgehäuses 11b so eingestellt, dass die Hauptträgheitsachse X des Messkörpers 1, 1' im befestigten Zustand auf der Längsachse A liegt.

Durch die Auswuchtung sind die beiden mit der Messkörperteile 1a, 1b bezüglich Gewicht und Gewichtsverteilung aufeinander abgestimmt. Die beiden ausgewuchteten Messkörperteile 1a, 1b weisen das gleiche Gewicht und die gleiche Gewichtsverteilung auf.

Die Genauigkeit der Auswuchtung wird gemäss der Norm DIN ISO 1940-1 mit einer Wuchtgüte angegeben. Vorzugsweise beträgt die Wuchtgüte des Messkörpers 1, 1' kleiner/gleich 10, vorzugsweise kleiner/gleich 5.

Durch die Auswuchtung ist ein von einer statischen Unwucht und einer dynamischen Unwucht bewirktes Stördrehmoment minimiert, was die Messgenauigkeit erhöht. Auch stellt die durch die Auswuchtung erzielte Minimierung des Stördrehmoments eine Normierung der Messsignale dar. Denn so werden Messsignale mit Messkörpern 1, 1' mit unterschiedlichen Hohlraumdurchmessern D10, D10' vergleichbar, weil bei allen diesen Messkörpern 1, 1' der Schwerpunkt S des Messkörpers 1, 1' auf der Längsachse A liegt und auch die Hauptträgheitsachse X des Messkörpers 1, 1' auf der Längsachse A liegt.

Vorzugsweise wird der erste Gehäusehohlraum 110a, 110a' im ersten Messkörperteilgehäuse 11a additiv gefertigt, denn nur so lassen sich der erste Hinterschnitt 110aaa, 110aaa' mit der vorzugsmässigen Wuchtgüte fertigen. Vorzugsweise wird auch der zweite Gehäusehohlraum 110b, 110b' im zweiten Messkörperteilgehäuse 11b additiv gefertigt, denn nur so lassen sich der zweite Hinterschnitt 110bbb, 110bbb' mit der vorzugsmässigen Wuchtgüte fertigen.

Die Messeinheit 12 weist eine Trägereinheit 121, einen Dehnungsmessstreifen 122 und ein elektrisches Kontaktelement 123 auf.

Die Trägereinheit 121 ist hohlzylinderförmig. In der Ansicht gemäss Fig. 4 und der Explosionsdarstellung gemäss Fig. 5 ist die Trägereinheit 121 mehrteilig. Vorzugsweise ist die Trägereinheit 121 in einer in der Längsachse A liegenden Ebene in zwei Trägerelemente 121a, 121b halbiert und die beiden Trägerelemente 121a, 121b haben die Form von kongruenten Hälften von Hohlzylindern. Die beiden Trägerelemente 121a, 121b sind aus einem mechanisch beständigem Material wie Metall, Kunststoff, usw.

Die beiden Trägerelemente 121a, 121c weisen Steckelemente 121c wie Schnapphaken, usw. auf. Die Steckelemente 123c sind endständig an den beiden Trägerelementen 121a, 121b angebracht. Die Steckelemente 121c sind dazu ausgebildet, per Formschluss eine lösbare Verbindung miteinander einzugehen.

Die Trägereinheit 121 ist dazu ausgebildet, den Dehnungsmesstreifen 122 und das Kontaktelement 123 zu tragen. Die Trägereinheit 121 trägt den Dehnungsmesstreifen 122 auf einer radial der Welle W, W' zugewandten inneren Mantelfläche.

Der Dehnungsmessstreifen 122 ist dazu ausgebildet, unter der Wirkung des Drehmoments M ein Messsignal MS zu erzeugen. Der Dehnungsmessstreifen 122 kann eine Vollbrücke, Halbbrücke oder Viertelbrücke sein. Vorzugsweise erzeugt der Dehnungsmesstreifen 122 das Messsignal MS mit einer Bandbreite von 5kHz. Das Messsignal MS ist eine elektrische Spannung. Der Dehnungsmessstreifen 122 ist über elektrische Leiter mit dem elektrischen Kontaktelement 123 elektrisch verbunden. Die elektrischen Leiter leiten das Messsignal MS zum elektrischen Kontaktelement 123 ab.

Das elektrische Kontaktelement 123 ist dazu ausgebildet, das Messignal MS durch das Trägerelement 121 zu einer radial der Welle W, W' abgewandten äusseren Mantelfläche abzuleiten.

In der Ansicht gemäss Fig. 4 ist der Messkörper 1, 1' im aufgeklappten Zustand. In den Ansichten gemäss Fig. 2 und 3 ist der Messkörper 1, 1' im zugeklappten Zustand. Im zugeklappten Zustand des Messkörpers 1, 1' sind das elektrische Kontaktelement 123 und die Messverstärkereinheit 13 dazu ausgebildet, über elektrische Kontakte elektrisch miteinander verbunden zu sein. Die elektrischen Kontakte leiten das Messsignal MS zur Messverstärkereinheit 13 ab.

Die Messverstärkereinheit 13 weist eine elektrische Verstärkerschaltung 131 mit einem Operationsverstärker auf. Die elektrische Verstärkerschaltung 131 ist dazu ausgebildet, das Messsignal MS zu verstärken. Auch das verstärkte Messsignal MS ist eine elektrische Spannung. Die elektrische Verstärkerschaltung 131 verstärkt das Messsignal MS mit einstellbaren Verstärkungsfaktoren von 10¹, 10², 103, 10⁴, usw. Die Messverstärkereinheit 13 ist über elektrische Leiter mit der Telemetrieeinheit 14 elektrisch verbunden. Die elektrischen Leiter übertragen das verstärkte Messsignal MS zur Telemetrieeinheit 14. Die elektrischen Leiter übertragen auch Steuerdaten SD zur Messverstärkereinheit 13.

Die Telemetrieeinheit 14 weist eine elektrische Telemetrieschaltung 141 und eine Rotorantenne 142 auf.

Die elektrische Telemetrieschaltung 141 weist einen Analog-/Digital-Wandler auf und ist dazu ausgebildet, das verstärkte Messsignal MS in Messdaten MD zu digitalisieren. Die Messdaten MD sind binäre Zahlenfolgen mit vorzugsweise 16bit Auflösung.

Die Rotorantenne 142 ist dazu ausgebildet, Messdaten MD drahtlos an die Auswerteeinheit 2 zu senden. Dazu weist die Auswerteeinheit 2 eine Statorantenne 20 auf. Die Statorantenne 20 ist dazu ausgebildet, von der Rotorantenne 142 gesendete Messdaten MD zu empfangen. Die drahtlose Datenübertragung zwischen der Rotorantenne 142 und der Statorantenne 20 ist bidirektional. Die Statorantenne 20 kann Steuerdaten SD an die Rotorantenne 142 senden und die Rotorantenne 142 kann von der Statorantenne 20 gesendete Steuerdaten SD empfangen. Bei dieser drahtlosen Übertragung werden Messdaten MD und Steuerdaten SD als elektromagnetische Wellen gesendet und empfangen. Vorzugsweise übertragen die Rotorantenne 142 und die Statorantenne 20 Messdaten MD und Steuerdaten SD drahtlos im Industrial Scientific and Medical (ISM)-Band von 2.402GHz bis 2.480GHz. Die drahtlose Übertragung der Messdaten MD und der Steuerdaten SD ist in Fig. 1 als gekrümmte Kreissegmente dargestellt.

Die Statorantenne 20 ist über eine elektrische Datenleitung 21 mit der Auswerteeinheit 2 elektrisch verbunden. Die elektrische Datenleitung 21 übermittelt Messdaten MD an die Auswerteeinheit 2 und sie übermittelt Steuerdaten SD an die Statorantenne 20.

Die Energiespeichereinheit 15 weist mindestens einen Speicher für elektrische Energie wie einen wiederaufladbaren Akkumulator, eine nicht wiederaufladbare Batterie, usw. auf. Vorzugsweise ist die Energiespeichereinheit 15 ein Lithium-Ionen Akkumulator, ein Lithium-Polymer-Akkumulator, eine Zink-Luft-Batterie, usw. Die Energiespeichereinheit 15 ist dazu ausgebildet, den Messkörper 1, 1' für eine Betriebsdauer von mindestens 40h mit elektrischer Energie zu versorgen. Die Energiespeichereinheit 15 ist klein dimensioniert und weist ein geringes Gewicht auf. In der Explosionsdarstellung gemäss Fig. 5 weist die Energiespeichereinheit 15 als Speicher vier Lithium-Ionen Akkumulatoren mit einer Kapazität von jeweils 715mAh, einem Gewicht von jeweils 20g und äussere Abmessungen von 49mm Länge und 14mm Durchmesser auf.

Die Energiespeichereinheit 15 weist ein Energiezuführelement 151 auf. Im zugeklappten Zustand des Messkörpers 1, 1' sind das Energiezuführelement 151, die Messverstärkereinheit 13 und die Telemetrieeinheit 14 dazu ausgebildet, über elektrische Kontakte elektrisch miteinander verbunden zu sein. Durch diese elektrische Kontakte werden die Messverstärkereinheit 13 und die Telemetrieeinheit 14 im ersten Messkörperteilgehäuse 11a von der Energiespeichereinheit 15 im zweiten Messkörperteilgehäuse 11b mit elektrischer Energie versorgt.

Auch weist die Energiespeichereinheit 15 einen Stromversorgungsanschluss 152 auf. Der Stromversorgungsanschluss 152 ist ein Steckverbinder wie USB-C, usw. In der Ansicht gemäss Fig. 4 und der Explosionsdarstellung gemäss Fig. 5 ist der Stromversorgungsanschluss 152 im ersten Messkörperteilverschluss 11aa angeordnet. Der Stromversorgungsanschluss 152 ist mit der Messverstärkereinheit 13 im ersten Messkörperteilgehäuse 11a elektrisch verbunden. Im zugeklappten Zustand des Messkörpers 1, 1' ist der Stromversorgungsanschluss 152 somit über die Messverstärkereinheit 13 mit dem Energiezuführelement 151 und der Energiespeichereinheit 15 im zweiten Messkörperteilgehäuse 11b elektrisch verbunden. Durch Anschliessen einer externen elektrischen Stromversorgung über ein Kabel an den Stromversorgungsanschluss 152 ist die Energiespeichereinheit 15 mit elektrischer Energie aufladbar. Das Aufladen des an der Welle W, W' befestigten Messkörpers 1, 1' erfolgt einfach und rasch. Dazu muss der Messkörper 1, 1' nicht von der Welle W, W' entfernt werden. In einer Aufladezeit von weniger als 30min ist die leere Energiespeichereinheit 15 zu mindestens 80% mit elektrischer Energie geladen.

Zudem lässt sich die Energiespeichereinheit 15 des an der Welle W, W' befestigten Messkörpers 1, 1' einfach und rasch austauschen. Auch dazu muss der Messkörper 1, 1' nicht von der Welle W, W' entfernt werden. Durch Öffnen des zweiten Messkörperteilverschlusses 11bb ist der zweite Gehäusehohlraum 110b, 110b' von ausserhalb des Messkörpers 1, 1' zugänglich. Nun lässt sich die Energiespeichereinheit 15 aus dem zweiten Gehäusehohlraum 110b, 110b' entnehmen. Für die entnommene Energiespeichereinheit 15 lässt sich so eine neue Energiespeichereinheit 15' in den zweiten Gehäusehohlraum 110b, 110b' einsetzen. So lassen sich die in der Explosionsdarstellung gemäss Fig. 5 als Speicher dargestellten vier Lithium-Ionen Akkumulatoren, falls sie leer sind, durch volle Lithium-Ionen Akkumulatoren austauschen. Daraufhin wird der zweite Gehäusehohlraum 110b, 110b' wieder durch den zweiten Messkörperteilverschluss 11bb verschlossen. Das Austauschen der Energiespeichereinheit 15 erfolgt in weniger als 5min.

Die Auswerteeinheit 2 weist mindestens einen Datenspeicher 22, mindestens einen Datenprozessor 23, mindestens eine Eingabe-/Empfangseinheit 24 und mindestens eine Ausgabeeinheit 25 auf.

Die Auswerteeinheit 2 ist dazu ausgebildet, die Messdaten MD auszuwerten und Steuerdaten SD zur Ansteuerung des Messkörpers 1, 1' zu erzeugen.

In der Auswerteeinheit 2 ist ein Auswerteprogramm P im Datenspeicher 22 gespeichert und in den Datenprozessor 23 ladbar. Das in den Datenprozessor 23 geladene Auswerteprogramm P erzeugt Befehle, welche Befehle von der Auswerteeinheit 2 automatisch ausgeführt werden. Im Sinne der Erfindung hat das Adjektiv "automatisch" die Bedeutung, dass die vom Auswerteprogramm P erzeugten Befehle von der Auswerteeinheit 2 ohne Mitwirkung einer menschlichen Person ausgeführt werden.

Die Auswerteeinheit 2 ist über die Eingabe-/Empfangseinheit 24 bedienbar. Im Sinne der Erfindung bedeutet das Verb "Bedienen", dass eine menschliche Person über die Eingabe-/Empfangseinheit 24 Befehle geben kann, welche Befehle von der Auswerteeinheit 2 ausgeführt werden. Die Eingabe-/Empfangseinheit 24 kann eine Tastatur zur Eingabe von Befehlen, eine Antenne zum Empfang von Befehlen, usw. sein. Über die Tastatur werden Befehle als Zeichenfolge eingegeben und die Auswerteeinheit 2 erzeugt dafür Steuerdaten SD. Über die Antenne werden die Befehle als elektromagnetische Wellen empfangen und die Auswerteeinheit 2 erzeugt dafür Steuerdaten SD.

Somit erzeugt die Auswerteeinheit 2 Steuerdaten SD zur Ansteuerung des Messkörpers 1, 1' auf Befehl des Auswerteprogrammes P oder auf Befehl der Eingabe-/Empfangseinheit 24. Die Steuerdaten SD führen vielfältige Befehle aus.

So lässt sich mit den Steuerdaten SD der Messkörper 1, 1' starten oder stoppen. Dazu erzeugt die Auswerteeinheit 2 Steuerdaten SD mit Angaben zum Starten oder Stoppen des Messkörpers 1, 1' und überträgt sie an die Messverstärkereinheit 13. Die Messverstärkereinheit 13 startet oder stoppt den Messkörper 1, 1' gemäss der Steuerdaten SD.

Mit den Steuerdaten SD lässt sich auch der Nullpunkt der elektrischen Verstärkerschaltung 131 einstellen. Der Nullpunkt kann mit der Zeit und äusseren Einflüssen wie der Temperatur driften. Für eine hohe Messgenauigkeit ist daher ein Abgleich des Nullpunkts nötig. Der Nullpunkt sollte um nicht mehr als 10% (oberer - und unterer Grenzwert) vom tatsächlichen Nullpunkt abweichen. Falls der Nullpunkt nicht innerhalb dieser Grenzwerte liegt, ermittelt das Auswerteprogramm P einen neuen Nullpunkt, welcher innerhalb der Grenzwerte liegt. Alternativ gibt die Eingabe-/Empfangseinheit 24 den Befehl, einen neuen Nullpunkt einzustellen. Somit erzeugt die Auswerteeinheit 2 Steuerdaten SD mit der Angabe des neuen Nullpunkts und überträgt die Steuerdaten SD an die Messverstärkereinheit 13. Die elektrische Verstärkerschaltung 131 benutzt dann den neuen Nullpunkt gemäss der Steuerdaten SD.

Auch lässt sich mit den Steuerdaten SD der Verstärkungsfaktor der elektrischen Verstärkerschaltung 131 einstellen. Jedes verstärkte Messsignal MS ist bis zu einem grössten Wert oder Endwert (Full Scale) darstellbar. Für eine bestmögliche Darstellung sollte das verstärkte Messsignal MS den Endwert (oberer Grenzwert) nicht übersteigen und es sollte auch nicht mehr als eine Grössenordnung kleiner als der Endwert (unterer Grenzwert) sein. Falls das verstärkte Messsignal MS nicht innerhalb dieser Grenzwerte liegt, ermittelt das Auswerteprogramm P einen anderen Verstärkungsfaktor, mit welchem das verstärkte Messsignal MS innerhalb der Grenzwerte liegt. Alternativ gibt die Eingabe-/Empfangseinheit 24 den Befehl, einen solchen anderen Verstärkungsfaktor einzustellen. Somit erzeugt die Auswerteeinheit 2 Steuerdaten SD mit der Angabe des Verstärkungsfaktors und überträgt die Steuerdaten SD an die Messverstärkereinheit 13. Die elektrische Verstärkerschaltung 131 verstärkt das Messsignal MS gemäss der Steuerdaten SD.

Optional weist die Vorrichtung V einen Drehwinkelaufnehmer 30 auf. Der Drehwinkelaufnehmer 30 kann ein optischer Sensor, ein magnetischer Sensor, usw. sein, welcher berührungslos den Drehwinkel α der Welle W, W' erfasst und für den erfassten Drehwinkel α ein Drehwinkelsignal WS erzeugt. Über eine elektrische Signalleitung 31 ist der Drehwinkelaufnehmer 30 mit der Auswerteinheit 2 elektrisch verbunden. Die elektrische Signalleitung 31 übermittelt ein Winkelsignal WS an die Auswerteeinheit 2.

Die Auswerteeinheit 2 ist dazu ausgebildet, das Winkelsignal WS auszuwerten. So bildet das in den Datenprozessor 23 geladene Auswerteprogramm P aus dem Winkelsignal WS Angaben zur Drehrichtung der Welle W, W' und die Winkelposition der Welle W, W'.

Der Messkörper 1, 1' wird in drei Schritten an der Welle W, W' befestigt.

In einem ersten Schritt werden die beiden Trägerelemente 121a, 121b auf die Welle W, W' gesetzt und über die Steckelemente 121 miteinander verbunden.

In einem zweiten Schritt werden die beiden Messkörperteilgehäuse 11a, 11b im aufgeklappten Zustand auf die Trägereinheit 121 gesetzt.

In einem dritten Schritt werden die beiden Messkörperteilgehäuse 11a, 11b durch Verschwenkung um die Längsachse A zugeklappt über die Verbindungseinheit 112 miteinander verbunden. Im zugeklappten Zustand des Messkörpers 1, 1' sind das elektrische Kontaktelement 123 und die Messverstärkereinheit 13 über elektrische Kontakte elektrisch miteinander verbunden. Im zugeklappten Zustand des Messkörpers 1, 1' sind das Energiezuführelement 151, die Messverstärkereinheit 13 und die Telemetrieeinheit 14 über elektrische Kontakte elektrisch miteinander verbunden und die Messverstärkereinheit 13 und die Telemetrieeinheit 14 im ersten Messkörperteilgehäuse 11a wird von der Energiespeichereinheit 15 im zweiten Messkörperteilgehäuse 11b mit elektrischer Energie versorgt.

### Bezugszeichenliste

- α: Drehwinkel
- A: Längsachse
- B: erste Schnittachse
- B-B: erster Querschnitt
- C: zweite Schnittachse
- C-C: zweiter Querschnitt
- D10, D10': Hohlraumdurchmesser
- M: Drehmoment
- MD: Messdaten
- MS: Messsignal
- P: Auswerteprogramm
- S: Schwerpunkt
- SD: Steuerdaten
- V: Vorrichtung
- W, W': Welle
- WD, WD': Wellendurchmesser
- WS: Winkelsignal
- X: Trägheitsachse
- 1, 1': Messkörper
- 1a, 1b': Messkörperteil
- 10, 10': axialer Hohlraum
- 11: Messkörpergehäuse
- 11a, 11b: Messkörperteilgehäuse
- 11aa, 11bb: Messkörperteilverschluss
- 110a, 110a': erster Gehäusehohlraum
- 110aa, 110aa': erste Kante
- 110aaa, 110aaa'erster: Hinterschnitt
- 110b, 110b': zweiter Gehäusehohlraum
- 110bb, 110bb': zweite Kante
- 110bbb, 110bbb': zweiter Hinterschnitt
- 111: Gelenkeinheit
- 111a: Stift
- 111b: Buchse
- 112: Verbindungseinheit
- 112a: Schraube
- 112aa: Durchgangsloch
- 112b: Gewindebohrung
- 12: Messeinheit
- 121: Trägereinheit
- 121a, 121b: Trägerelement
- 121c: Steckelement
- 122: Dehnungsmessstreifen
- 123: elektrisches Kontaktelement
- 13: Messverstärkereinheit
- 131: elektrische Verstärkerschaltung
- 14: Telemetrieeinheit
- 141: elektrische Telemetrieschaltung
- 142: Rotorantenne
- 15, 15': Energiespeichereinheit
- 151: Energiezuführelement
- 152: Stromversorgungsanschluss
- 20: Statorantenne
- 21: elektrische Datenleitung
- 2: Auswerteeinheit
- 22: Datenspeicher
- 23: Datenprozessor
- 24: Eingabe-/Empfangseinheit
- 25: Ausgabeeinheit
- 30: Drehwinkelaufnehmer
- 31: elektrische Signalleitung

## Patentansprüche

1. Vorrichtung (V) zur Messung des Drehmoments (M) einer rotierenden Welle (W, W'); welche Vorrichtung (V) einen Messkörper (1, 1') und eine Auswerteeinheit (2) aufweist; welcher Messkörper (1, 1') an der Welle (W, W') befestigbar ist und im befestigten Zustand mit der Welle (W, W') um eine Längsachse (A) der Welle (W, W') rotiert; welcher Messkörper (1, 1') eine Messeinheit (12), eine Messverstärkereinheit (13) und eine Telemetrieeinheit (14) aufweist; welche Messeinheit (12) im befestigten Zustand unter der Wirkung des Drehmoments (M) ein Messsignal (MS) erzeugt; welche Messverstärkereinheit (13) das Messsignal (MS) verstärkt; welche Telemetrieeinheit (14) das verstärkte Messsignal (MS) digitalisiert und drahtlos an die Auswerteeinheit (2) überträgt; **dadurch gekennzeichnet, dass** der Messkörper (1, 1') eine Hauptträgheitsachse (X) aufweist, welche Hauptträgheitsachse (X) im befestigten Zustand auf der Längsachse (A) liegt.

2. Vorrichtung (V) nach Anspruch 1, **dadurch gekennzeichnet, dass** der Messkörper (1, 1') ein Messkörpergehäuse (11) aufweist, welches Messkörpergehäuse (11) mehrteilig ist und ein erstes Messkörperteilgehäuse (11a) mit einem ersten Gehäusehohlraum (110a, 110a') aufweist; und dass der erste Gehäusehohlraum (110a, 110a') die Messverstärkereinheit (13) und die Telemetrieeinheit (14) aufnimmt.

3. Vorrichtung (V) nach Anspruch 2, **dadurch gekennzeichnet, dass** das Messkörpergehäuse (11) ein zweites Messkörperteilgehäuse (11b) mit einem zweiten Gehäusehohlraum (110b, 11b') aufweist; dass der Messkörper (1, 1') eine Energiespeichereinheit (15) aufweist; und dass der zweite Gehäusehohlraum (110b, 110b') die Energiespeichereinheit (15) aufnimmt.

4. Vorrichtung (V) nach Anspruch 3, **dadurch gekennzeichnet, dass** das Messkörpergehäuse (11) einen zweiten Messkörperteilverschluss (llbb) aufweist, welcher zweite Messkörperteilverschluss (llbb) den zweiten Gehäusehohlraum (110b) mit der Energiespeichereinheit (15) verschliesst; dass sich der zweite Messkörperteilverschluss (llbb) im befestigten Zustand öffnen lässt und der zweite Gehäusehohlraum (110b, 110b') mit der Energiespeichereinheit (15) von ausserhalb des Messkörpers (1, 1') zugänglich ist; dass die Energiespeichereinheit (15) aus dem zweiten Gehäusehohlraum (110b, 110b') entnehmbar und eine neue Energiespeichereinheit (15') in den zweiten Gehäusehohlraum (110b, 110b') einsetzbar ist; und dass mit dem zweiten Messkörperteilverschluss (llbb) der zweite Gehäusehohlraum (110b, 110b') mit der neuen Energiespeichereinheit (15') verschliessbar ist.

5. Vorrichtung (V) nach einem der Ansprüche 3 oder 4, **dadurch gekennzeichnet, dass** der erste Gehäusehohlraum (110a, 110a') mindestens einen ersten Hinterschnitt (110aaa, 110aaa') aufweist; dass über die Grösse und die Form des ersten Hinterschnitts (110aaa, 110aaa') das Gewicht und die Gewichtsverteilung des ersten Messkörperteilgehäuses (11a) so eingestellt sind, dass die Hauptträgheitsachse (X) des Messkörpers (1, 1') im befestigten Zustand auf der Längsachse (A) liegt; dass der zweite Gehäusehohlraum (110b, 110b') mindestens einen zweiten Hinterschnitt (110bbb, 110bbb') aufweist; und dass über die Grösse und die Form des zweiten Hinterschnitts (110bbb, 111bbb') das Gewicht und die Gewichtsverteilung des zweiten Messkörperteilgehäuses (11b) so eingestellt sind, dass die Hauptträgheitsachse (X) des Messkörpers (1, 1') im befestigten Zustand auf der Längsachse (A) liegt.

6. Vorrichtung (V) nach einem der Ansprüche 3 bis 5, **dadurch gekennzeichnet, dass** die beiden Messkörperteilgehäuse (11a, 11b) die Form von kongruenten Hälften von Hohlzylindern haben.

7. Vorrichtung (V) nach einem der Ansprüche 3 bis 6, **dadurch gekennzeichnet, dass** die beiden Messkörperteilgehäuse (11a, 11b) additiv gefertigt sind.

8. Vorrichtung (V) nach einem der Ansprüche 1 bis 7, **dadurch gekennzeichnet, dass** der Messkörper (1, 1') hohlzylinderförmig ist und einen axialen Hohlraum (10, 10) aufweist; dass der axiale Hohlraum (10, 10) einen Hohlraumdurchmesser (D1, D1') aufweist, welcher Hohlraumdurchmesser (D1, D1') gleich einem Wellendurchmesser (DW, DW') der Welle (W, W') ist, an der der Messkörper (1, 1') befestigbar ist; und dass die Vorrichtung (V) für Wellen (W, W') mit unterschiedlichen Wellendurchmessern (DW, DW'), mehrere Messkörper (1, 1') mit Hohlraumdurchmessern (D1, D1') aufweist, welche Hohlraumdurchmesser (D1, D1') gleich den unterschiedlichen Wellendurchmessern (DW, DW') der Wellen (W, W') sind.

9. Vorrichtung (V) nach einem der Ansprüche 1 bis 8, **dadurch gekennzeichnet, dass** die Messeinheit (12) eine Trägereinheit (121) und einen Dehnungsmessstreifen (122) aufweist; dass die Trägereinheit (121) den Dehnungsmesstreifen (122) auf einer radial der Welle (W, W') zugewandten inneren Mantelfläche trägt; und dass der Dehnungsmessstreifen (122) dazu ausgebildet ist, unter der Wirkung des Drehmoments (M) ein Messsignal (MS) zu erzeugen.

10. Vorrichtung (V) nach Anspruch 9, **dadurch gekennzeichnet, dass** die Trägereinheit (121) mehrteilig ist und ein erstes Trägerelement (121a) und ein zweites Trägerelement (121b) aufweist; und dass die beiden Trägerelemente (121a, 121b) die Form von kongruenten Hälften von Hohlzylindern haben.

11. Vorrichtung (V) nach Anspruch 10, **dadurch gekennzeichnet, dass** die beiden Trägerelemente (121a, 121b) Steckelemente (121c) aufweisen; und dass die Steckelemente (121c) dazu ausgebildet sind, per Formschluss eine lösbare Verbindung miteinander einzugehen.

12. Verfahren zur Messung des Drehmoments (M) einer rotierenden Welle (W, W'); unter Verwendung einer Vorrichtung (V) mit einem Messkörper (1, 1') und einer Auswerteeinheit (2); welcher Messkörper (1, 1') eine Messeinheit (12), eine Messverstärkereinheit (13) und eine Telemetrieeinheit (14) aufweist; wobei der Messkörper (1, 1') an der Welle (W, W') befestigt wird; wobei die Welle (W, W') in Rotation um eine Längsachse (A) der Welle (W, W') gesetzt wird und das Drehmoment (M) überträgt; wobei die Messeinheit (12) unter der Wirkung des Drehmoments (M) ein Messsignal (MS) erzeugt; wobei die Messverstärkereinheit (13) das Messsignal (MS) verstärkt; und wobei die Telemetrieeinheit (14) das verstärkte Messsignal (MS) digitalisiert und drahtlos an die Auswerteeinheit (2) überträgt; **dadurch gekennzeichnet, dass** ein Messkörper (1, 1') bereitgestellt wird, welcher Messkörper (1, 1') eine Hauptträgheitsachse (X) aufweist, welche Hauptträgheitsachse (X) im befestigten Zustand auf der Längsachse (A) liegt.

13. Verfahren nach Anspruch 12, **dadurch gekennzeichnet, dass** eine Messeinheit (12) bereitgestellt wird, welche Messeinheit (12) eine Trägereinheit (121) und einen Dehnungsmessstreifen (122) aufweist, welche Trägereinheit (121) mehrteilig ist und ein erstes Trägerelement (121a) und ein zweites Trägerelement (121b) aufweist, welche beiden Trägerelemente (121a, 121b) Steckelemente (121c) aufweisen; und dass in einem ersten Schritt der Befestigung des Messkörpers (1, 1') auf der Welle (W, W') die beiden Trägerelemente (121a, 121b) auf die Welle (W, W') gesetzt und über die Steckelemente (121) miteinander verbunden werden.

14. Verfahren nach Anspruch 13, **dadurch gekennzeichnet, dass** ein Messkörper (1, 1') bereitgestellt wird, welcher Messkörper (1, 1') ein Messkörpergehäuse (11) aufweist, welches Messkörpergehäuse (11) mehrteilig ist und ein erstes Messkörperteilgehäuse (11a) und ein zweites Messkörperteilgehäuse (11b) aufweist, welche beiden Messkörperteilgehäuse (11a, 11b) eine Gelenkeinheit (111) aufweisen, welche Gelenkeinheit (111) dazu ausgebildet ist, die beiden Messkörperteilgehäuse (11a, 11b) um die Längsachse (A) schwenkbar zusammenzuhalten; und dass in einem zweiten Schritt der Befestigung des Messkörpers (1, 1') auf der Welle (W, W') die beiden Messkörperteilgehäuse (11a, 11b) im aufgeklappten Zustand auf die Trägereinheit (121) gesetzt werden.

15. Verfahren nach Anspruch 14, **dadurch gekennzeichnet, dass** zwei Messkörperteilgehäuse (11a, 11b) bereitgestellt werden, welche beiden Messkörperteilgehäuse (11a, 11b) eine Verbindungseinheit (112) aufweisen, welche Verbindungseinheit (112) dazu ausgebildet ist, die beiden Messkörperteilgehäuse (11a, 11b) lösbar miteinander zu verschliessen; und dass in einem dritten Schritt der Befestigung des Messkörpers (1, 1') auf der Welle (W, W') die beiden Messkörperteilgehäuse (11a, 11b) durch Verschwenkung um die Längsachse (A) zugeklappt über die Verbindungseinheit (112) miteinander verbunden werden.
